# FASCICULE DE BREVET EUROPEEN

(11) **EP 1 506 480 B1**
(45) Date de publication et mention de la délivrance du brevet: **08.08.2018**
(21) Numéro de dépôt: 03752828.8
(22) Date de dépôt: 16.05.2003
(51) Int. Cl.: G06F 21/60

(54) **PROCEDE DE CONTROLE D'ACCES A DES RESSOURCES CRYPTOGRAPHIQUES**
VERFAHREN ZUR ZUGANGSKONTROLLE AUF KRYPTOGRAPHISCHEN RESSOURCEN
METHOD OF CONTROLLING ACCESS TO CRYPTOGRAPHIC RESOURCES AND A COMPUTER PLATFORM AND SOFTWARE MODULE WHICH CAN BE USED TO PERFORM SAID METHOD

(30) Priorité: 21.05.2002 FR 0206160
(43) Date de publication de la demande: 16.02.2005
(73) Titulaire: Orange, 75015 Paris (FR)
(72) Inventeur: CAMUS, Sylvie, F-91120 Palaiseau (FR); FRISCH, Laurent, F-75013 Paris (FR); MOUTON, Dimitri, F-75015 Paris (FR)
(74) Mandataire: Cabinet Plasseraud
(86) Numéro de dépôt international: PCT/FR2003/001494
(87) Numéro de publication internationale: WO 2003/098436

(56) Documents cités:
- EP-A2- 0 982 692
- WO-A-01/35194
- WO-A1-01/07990
- US-A- 5 689 565
- US-B1- 6 389 535
- EMMS J: "A DEFINITION OF AN ACCESS CONTROL SYSTEMS LANGUAGE" COMPUTER STANDARDS AND INTERFACES, ELSEVIER SEQUOIA. LAUSANNE, CH, vol. 6, no. 4, 1987, pages 443-454, XP000005362 ISSN: 0920-5489

## Description

La présente invention concerne la mise en oeuvre de techniques cryptographiques par des applications informatiques.

Elle vise plus particulièrement à offrir des services de sécurité applicative à différentes applications, écrites dans un langage à code mobile (LCM en abrégé) et s'exécutant sur diverses plates-formes informatiques. Ces services de sécurité applicative peuvent nécessiter l'accès à divers types de ressources cryptographiques (RC en abrégé) contenues dans des supports cryptographiques variés. On cherche ainsi à pouvoir mutualiser ces RC entre les applications, par une architecture ouverte et prête à l'évolution des techniques employées, notamment des plates-formes, des méthodes cryptographiques (algorithmes, tailles de clés, ...), des supports et standards cryptographiques, des services de sécurité applicative, des applications reposant sur ces services de sécurité applicative, etc.

Parmi les applications en LCM concernées par l'invention, on peut citer par exemple des applications de télé-procédure, de gestion de travaux ("workflow"), de courrier électronique, de publication de document, etc.

Leur écriture dans un langage à code mobile leur permet d'être indépendantes de la plate-forme sur laquelle elles s'exécutent. Ce langage peut par exemple être:
- Java (voir "The Java Language Specification" publié par la société Sun Microsystems, Inc.);
- CaML (voir http://caml.inria.fr/);
- C# (voir " C# Language Specification" publié par la société Microsoft Corporation); etc.

L'expression "plate-forme informatique" fait référence aux environnements matériels et logiciels aptes à supporter l'exécution des applications en LCM. Les plates-formes concernées sont par exemple:
- des ordinateurs équipés du système d'exploitation "Windows" de la société Microsoft Corporation (version 95/98/ME/NT/2000/XP) et d'un navigateur "Internet Explorer" de la société Microsoft Corporation ou "Netscape Navigator" de la société Netscape Communications Corporation;
- des ordinateurs équipés du système d'exploitation MacOS 8/9/X de la société Apple Computer, Inc. et d'un navigateur "Internet Explorer" ou "Netscape Navigator";
- des plates-formes "Sun Solaris" de la société Sun Microsystems, Inc. munies d'un serveur de type "WebSphere" de la société International Business Machines Corporation; etc.

Les services de sécurité applicative qu'il s'agit d'offrir aux applications sont par exemple des services de signature électronique, de vérification de signature électronique, de chiffrement, de déchiffrement, d'horodatage, de vérification d'horodatage, de protocole sécurisé, d'authentification, etc. Ils font appel à divers types de RC tels que clés cryptographiques, certificats, algorithmes permettant de les utiliser, etc.

Les supports cryptographiques peuvent être de type carte à puce, module raccordable à un port USB ("Universal Serial Bus") appelé "token USB", carte crypto-hardware, carte PCMCIA ("Personal Computer Memory Card International Association"), magasin logiciel, etc.

Il existe de nombreux standards cryptographiques concernant les algorithmes de cryptographie, la génération de clé, le format des messages de nature cryptographiques, les protocoles sécurisés, etc.

Les deux algorithmes de signature à clé publique les plus répandus sont RSA ("Rivest Shamir Adelman") et DSA ("Digital Signature Algorithm"). Le RSA peut aussi être utilisé pour le chiffrement. Le RSA fait l'objet d'un standard dit PKCS#1 ("Public Key Cryptography Standard N° 1") publié par la société RSA Security, Inc.. Les algorithmes de hachage les plus utilisés sont SHA-1 et MD5. Les algorithmes à clé secrète les plus répandus sont DES ("Digital Encryption Standard "), Triple DES, AES ("Advanced Encryption Standard"), IDEA ("International Data Encryption Algorithm"), RC4, KASUMI et MISTY.

Les formats les plus couramment utilisés pour des messages signés sont:
- PKCS#7, publié par la société RSA Security, Inc. et par l'Internet Engineering Task Force (IETF) en tant que RFC 2315, qui a été repris dans CMS ("Cryptographie Message Syntax", voir RFC 2630 de l'IETF), ces standards étant utilisés notamment dans la spécification S/MIME ("Secure Multipurpose Internet Mail Extensions") pour les courriers électroniques signés;
- PGP correspondant aux messages signés issus du logiciel PGP ("Pretty Good Privacy" commercialisé par la société Networks Associates Technology, Inc.) et de ses analogues;
- XML-DSig, faisant partie de la famille des formats de données XML ("eXtended Markup Language").

Les formats les plus couramment utilisés pour des messages chiffrés sont PKCS#7/CMS et PGP.

Pour l'accès à des ressources cryptographiques (RC), on distingue des interfaces de haut niveau et des interfaces de bas niveau. Les interfaces de haut niveau, notamment PKCS#11 et CAPI, offrent un niveau d'abstraction par rapport au support des éléments cryptographiques gérés.

PKCS#11 est un standard public et libre d'utilisation, publié par la société RSA Security, Inc.. Il décrit une interface logicielle de programmation (API, "Application Programming Interface") permettant des opérations cryptographiques de bas niveau telles que la génération et le stockage de clés, la signature électronique, le chiffrement et le déchiffrement de données, etc. Cependant, PKCS#11 ne mutualise pas les RC entre les différentes applications qui y font appel. PKCS#11 ne gère pas les chaînes de certificats de confiance. Il ne peut pas être invoqué depuis des langages à code mobile. Cette interface est utilisée notamment dans "Netscape Navigator" afin d'ouvrir les fonctionnalités cryptographiques du navigateur et du client de messagerie à des fournisseurs tiers. Cette interface est également employée dans la plupart des produits qui souhaitent cette même ouverture. La majorité des fournisseurs de matériel cryptographique offrent un module PKCS#11 pour accéder à leurs produits.

CAPI ("Crypto API") est une API développée par la société Microsoft Corporation et disponible uniquement sur les plates-formes "Windows". Elle offre des fonctions de sécurité applicative, ainsi que des fonctions de vérification de signature et de gestion de chaîne de certificats de confiance absentes de PKCS#11. CAPI n'est pas évolutive et ne permet pas d'ajouter des fonctions telles que l'horodatage ou de nouveaux protocoles. CAPI réalise une mutualisation des RC auxquelles elle à accès entre les applications qui font appel à elle. Mais elle ne peut généralement pas être invoquée depuis les langages à code mobile. Un module cryptographique s'interfaçant sous CAPI pour offrir des services de sécurité s'appelle un CSP ("Crypto Service Provider"). Pour être utilisables via CAPI, les CSP doivent être signés électroniquement par la société Microsoft Corporation, qui exige pour cela d'avoir accès aux sources du CSP. Les grands fournisseurs de matériels cryptographiques offrent en général un CSP pour accéder à leur produit.

D'autres interfaces d'accès aux RC existent à un niveau programmatique plus bas, c'est-à-dire offrant moins d'abstraction par rapport aux RC gérées.

Chaque support cryptographique matériel possède un ensemble d'ordres de base auxquels il sait répondre. Ces ordres, envoyés directement sur les connecteurs du support, permettent de réaliser les opérations cryptographiques de base. En, général, ces ordres de base ne sont pas publics, ou du moins pas documentés.

Le standard PC/SC ("Personal Computer / Smart Card") vise à offrir un niveau d'abstraction par rapport à ces ordres de très bas niveau, afin que la communication entre le poste de travail et le support cryptographique (par exemple la carte à puce) se fasse selon un jeu d'ordres commun à tous les supports cryptographiques. La plupart des CSP et des modules PKCS#11 s'appuient, pour leur interface basse, sur PC/SC. Chaque support cryptographique possède en général un pilote PC/SC qui est invoqué dans les CSP ou dans les modules PKCS#11 via l'interface standard PC/SC, et qui repose sur les ordres de base précités. PC/SC fournit l'accès mutualisé à certaines RC (cartes à puce, tokens USB) pour les applications qui s'appuient sur lui. Mais il ne peut pas être invoqué dans les langages à code mobile en général, et il ne fournit pas de services de haut niveau.

Les supports cryptographiques logiciels, eux, sont en général des magasins de clés et de certificats contenus dans des fichiers qui ont un format documenté ou non. "Netscape Navigator" conserve les clés et certificats cryptographiques dans deux fichiers nommés cert7.db et key3.db dont le format est stable même aux changements de versions du navigateur. Le format, connu, de ce fichier peut être une interface suffisante pour qu'un service puisse accéder à ces clés et certificats. Une interface d'accès à ces fichiers existe sur certaines plates-formes, notamment NSS ("Netscape Security Services"). Il s'agit de formats propriétaires.

Les langages à code mobile (LCM) sont des langages de programmation dont le code résultant n'est pas dépendant d'un microprocesseur ou d'un système d'exploitation. Pour s'exécuter, le programme a besoin de retrouver un environnement d'exécution similaire sur les différents ordinateurs sur lesquels il est amené à s'exécuter.

Les LCM qui nous intéressent en premier lieu sont ceux qui permettent de réaliser aussi des applications web. Le plus répandu est le langage Java de la société Sun Microsystems, Inc.. Les applications web Java s'exécutant dans l'environnement d'un navigateur s'appellent des applets. Un autre LCM apparu plus récemment est le langage C# de la société Microsoft Corporation. L'exemple qui sera considéré plus particulièrement dans la présente demande est celui de Java, mais les concepts s'appliquent à tout autre LCM.

Les LCM peuvent proposer des interfaces cryptographiques aux applications. Dans l'exemple de Java, l'architecture cryptographique Java (JCA, "Java Cryptography Architecture") et l'extension cryptographique Java (JCE, "Java Cryptography Extension") jouent ce rôle, afin de pouvoir manipuler des certificats, des clés, des algorithmes, etc. Avec la version 2 de Java est apparue également la "Trusted API" qui permet de gérer la confiance au moyen de certificats de clé publique.

Une application en LCM peut avoir besoin d'accéder à des fonctionnalités non disponibles dans son environnement d'exécution. Si ces fonctionnalités sont disponibles sous forme de librairie dynamique dépendante de la plate-forme, les environnements Java permettent d'accéder à ces ressources via des interfaces spécifiées mais non unifiées:
- JNI ("Java Native Interface" de la société Sun Microsystems, Inc.) s'appliquant aux navigateurs récents;
- JRI ("Java Runtime Interface" de la société Netscape Communications Corporation) s'appliquant à certaines versions anciennes de "Netscape Navigator" ou sur certaines plates-formes;
- RNI ("Raw Native Interface" de la société Microsoft Corporation) s'appliquant uniquement dans le navigateur "Internet Explorer".

Les techniques mentionnées ci-dessus constituent des briques disparates entrant dans la composition des application web sécurisées. Rien n'est prévu pour les faire fonctionner ensemble.

Pour l'accès aux RC depuis une applet Java, les choix sont très limités voire inexistants. Une applet Java ne peut pas utiliser les RC du navigateur dans lequel elle s'exécute. Elle ne peut pas non plus faire appel à des RC accessibles par une interface PKCS#11. Quant aux ressources JCA/JCE, elle sont souvent mal reconnues (ou pas reconnues du tout) dans les navigateurs. En outre, ces ressources JCA/JCE, quand elles sont reconnues, ne sont pas mutualisables entre plusieurs applications. Pour être mutualisable, une ressource doit être accessible à travers une interface standard indépendante du langage de programmation et de la plate-forme.

Pour l'utilisation des standards cryptographiques, les formats standards PKCS#7, PGP, et XML-DSig ne sont pas reconnus dans les LCM.

Les interfaces d'accès à des RC sont en général insuffisantes pour rendre entièrement les services de sécurité dont ont besoin les applications qui peuvent y faire appel.

Ainsi, PC/SC permet uniquement l'appel aux fonctions disponibles sur la carte à puce, qui sont très limitées (lire un certificat, faire signer une clé, en général). PKCS#11 permet la manipulation d'objets plus complexes, mais n'offre aucune fonction de vérification de chaîne de confiance d'un certificat, et n'inclut pas des fonctions complexes telles que l'horodatage ou l'appel à des protocoles de communication. CAPI permet la vérification de chaîne de Confiance mais ne traite ni le protocole OCSP (« Online Certificate Status Protocol », RFC, 2560, IETF), ni l'horodatage (voir RFC 3161, IETF).

Dans ces conditions, chaque programme nécessitant l'appel à ces RC doit implémenter en lui-même la logique d'enchaînement des briques élémentaires de sécurité, ce qui alourdit considérablement le coût du développement. D'autre part, cela entraîne des risques de faille dans la sécurité de l'application développée.

De plus, les implémentations des différentes interfaces les plus répandues ne sont pas toujours identiques d'un constructeur à l'autre, ce qui nécessite l'adaptation de chaque application à chaque fournisseur de RC. Par exemple, un service qui fonctionne avec un token USB du fournisseur A pourra ne pas fonctionner avec celui du fournisseur B si les implémentations de l'interface PKCS#11 réalisées par l'un et l'autre diffèrent.

Les RC sont de natures différentes sur le poste, accessibles à travers des interfaces très variées. Or, pour des raisons de complexité et de coût, les applications n'implémentent en général qu'un seul type d'interface, se fermant ainsi l'accès aux autres RC.

Il est également fréquent qu'une application gère elle-même une RC indépendante, via une interface propriétaire, et que cette ressource ne soit pas accessible aux autres applications.

Ainsi, dans la technique actuelle, les RC ne sont pas toutes accessibles à une application donnée, et il se peut qu'une RC ne soit pas accessible à toutes les applications.

Le document WO 01/35194 divulgue un système cryptographique fournissant des services redondants et résilients à un système informatique.

Un but de la présente invention est de s'affranchir dans une large mesure des problèmes ci-dessus.

L'invention propose ainsi un procédé selon la revendication 1, une plate-forme informatique selon la revendication 7 et un module logiciel selon la revendication 9. Des modes de réalisation sont décrits dans les revendications 2 à 6, 8 et 10. Il est également décrit, à titre d'exemple, un procédé de contrôle d'accès à des ressources cryptographiques depuis au moins une application informatique écrite dans un langage à code mobile, les ressources cryptographiques étant fournies par au moins une source cryptographique ayant une interface d'accès propre. On présente à l'application une interface mutualisée sensiblement indépendante des sources cryptographiques et de leurs interfaces d'accès respectives, et on place un module de traduction entre l'interface mutualisée et chaque interface d'accès à une source cryptographique pour assurer l'accès aux ressources cryptographiques depuis l'application à travers l'interface mutualisée.

Le procédé permet ainsi à un programme en LCM d'accéder à un ensemble hétérogène ou non de RC, via des interfaces d'accès identiques ou non. Le programme s'appuie sur une interface mutualisée unique de type API faisant abstraction de la nature des RC, déclarée dans le LCM, appelée "API de mutualisation". Les ordres que doit permettre cette interface sont typiquement des recherches de clés et de certificats cryptographiques, ainsi que les opérations qui demandent les accès aux clés privées ou secrètes stockées dans les RC (par exemple: signature électronique, déchiffrement à clé publique, chiffrement et déchiffrement à clé secrète, génération de clés, ...).

Les opérations ne nécessitant pas l'accès aux RC sont de préférence réalisées directement dans le LCM, pour des raisons de performances, et ce sans nuire à la sécurité. Certaines de ces opérations pourraient toutefois être réalisées également via l'accès aux RC.

L'API est implémentée par un module logiciel de traduction, ci-après appelé "pont", dont le but est de permettre aux programmes en LCM de dialoguer avec une unique implémentation de l'API de mutualisation. Le pont est typiquement écrit dans un langage dépendant de la plate-forme d'exécution du programme. Il peut être utilisé simultanément par plusieurs programmes.

Le pont repose sur l'ensemble des interfaces d'accès aux RC qu'il mutualise pour les applications à code mobile. Ainsi, vu du programme (et même de l'ensemble des programmes utilisant le pont), l'ensemble des RC sera accessible auprès d'une seule source, à savoir le pont, via une seule interface, à savoir l'API de mutualisation.

Dans l'exemple courant où le LCM est Java, l'API de mutualisation devra respecter une des interfaces d'interfonctionnement de Java avec la plate-forme. En fonction du contexte, cela pourra par exemple être JNI, JRI ou RNI.

Dans le cas courant où la plate-forme est équipée du système d'exploitation "Windows" (à partir des versions 95 et NT4), le pont pourra fédérer les RC accessibles via l'interface CAPI, les RC accessibles via l'interface PKCS#11, les RC accessibles via l'interface PC/SC, etc. Lorsque certaines RC sont accessibles via plusieurs interfaces, une façon de résoudre les aspects concurrents dupliqués par le pont à ces RC est de ne traiter qu'une de ces interfaces.

Dans le cas courant où le programme est une applet s'exécutant dans la machine virtuelle d'un LCM dans le navigateur, et souhaite accéder aux RC par la même interface que le navigateur, le pont peut ne faire appel qu'à cette interface (par exemple CAPI si le navigateur est "Internet Explorer", PKCS#11 s'il s'agit de "Netscape Navigator", ...).

Dans une réalisation avantageuse de l'invention, l'application écrite en LCM incorpore une boîte à outils cryptographiques à architecture modulaire comportant:
- un module de manipulation de formats de données utilisés dans l'accomplissement de fonctions cryptographiques;
- un module d'exécution d'algorithmes intervenant dans des opérations cryptographiques;
- un module d'accès aux ressources cryptographiques, coopérant avec le module de traduction par l'intermédiaire de l'interface mutualisée; et
- un module fonctionnel supervisant les modules de manipulation des formats de données, d'exécution d'algorithmes et d'accès aux ressources cryptographiques, et présentant une interface (API) fonctionnelle avec le reste de l'application.

Cette architecture modulaire des services de sécurité applicative présente de nombreux avantages pour le développeur d'applications en LCM. Elle permet ainsi de regrouper les fonctions cryptographiques dans une boîte à outils à laquelle le développeur, qui n'est pas nécessairement un expert en cryptographie, peut faire appel selon ses besoins en utilisant l'API fonctionnelle.

D'autre part, cette architecture se prête assez facilement aux évolutions de la technologie cryptographique. Pour la prise en compte de nouveaux standards de format de données, il suffira généralement de mettre à jour le seul module de manipulation des formats de données. Pour la prise en compte de nouveaux algorithmes cryptographiques, il suffira généralement de mettre à jour le seul module d'exécution d'algorithmes. En cas d'évolution de l'API de mutualisation, il suffira généralement de mettre à jour le seul module d'accès aux ressources cryptographiques. Là encore, ces différentes évolutions peuvent se faire sans avoir à être suivies par les développeurs des programmes en LCM. Pour la prise en compte de nouvelles fonctions de sécurité sur l'API fonctionnelle, il suffira souvent de mettre à jour le module fonctionnel.

Les modules précités de la boîte à outils cryptographiques peuvent être complétés par un module d'utilitaires invocable par chacun des autres modules et chargé notamment de gérer des caractéristiques spécifiques de la plate-forme d'exécution de l'application. Si des évolutions de la plate-forme requièrent des mises à jour de l'application, celles-ci pourront généralement, en ce qui concerne la boîte à outils cryptographiques, se limiter à ce module d'utilitaires.

Un autre aspect de la présente invention se rapporte à une plate-forme informatique apte à l'exécution d'applications écrites en LCM, comprenant au moins une source cryptographique ayant une interface d'accès propre, et un module de traduction, ou pont, pour présenter auxdites applications une interface mutualisée sensiblement indépendante des sources cryptographiques et de leurs interfaces d'accès respectives. Le pont est placé entre l'interface mutualisée et chaque interface d'accès à une source cryptographique pour assurer l'accès aux ressources cryptographiques depuis les applications à travers l'interface mutualisée.

Un autre aspect encore de la présente invention se rapporte à un module logiciel de traduction propre à constituer le pont d'une telle plate-forme informatique.

D'autres particularités et avantages de la présente invention apparaîtront dans la description ci-après d'exemples de réalisation non limitatifs, en référence aux dessins annexés, dans lesquels :
- la figure 1 est un schéma synoptique d'une plate-forme informatique propre à l'exécution d'une application en LCM selon l'invention;
- la figure 2 est un schéma synoptique d'une application en LCM fonctionnant conformément à l'invention.

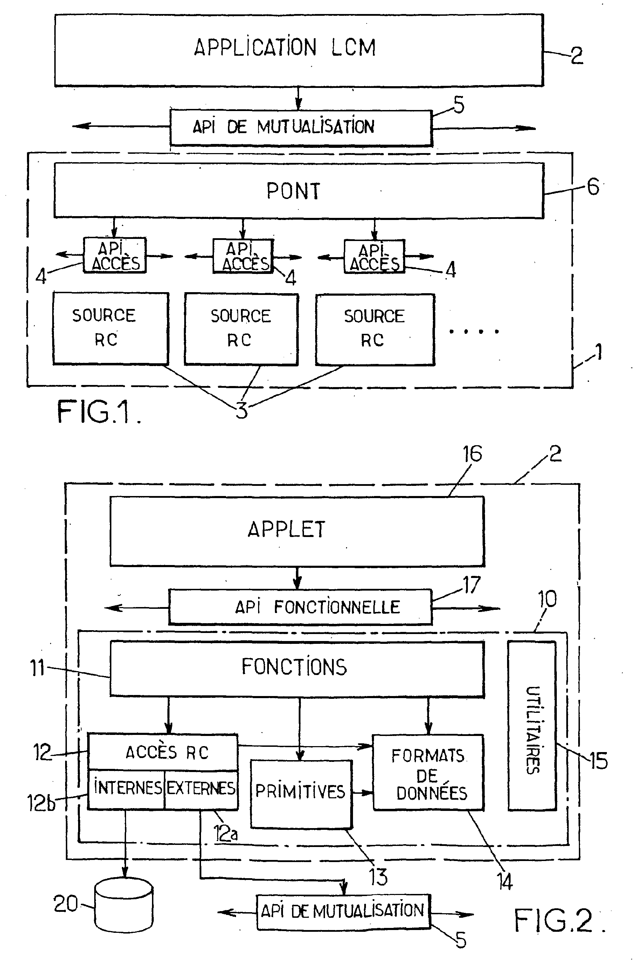

En référence à la figure 1, un système équipé conformément à l'invention comprend une plate-forme informatique 1 adaptée à l'exécution d'applications 2 écrites en langage à code mobile (LCM). Divers types de plates-formes et de LCM, tels que ceux évoqués précédemment, peuvent être employés. Dans l'exemple illustré par la figure 1, la plate-forme 1 est équipée de plusieurs sources 3 de ressources cryptographiques (RC) présentant chacune une API propre 4 pour l'accès aux RC. Ces API 4 peuvent être de même nature (par exemple PKCS#11, CAPI, PC/SC, ...) ou de natures différentes.

Pour coopérer avec les fonctions de sécurité d'applications 2 écrites en LCM, la plate-forme 1 est pourvue d'une API de mutualisation 5 implémentée par un programme de traduction résidant 6 appelé "pont". Ce pont 6 est placé entre l'API de mutualisation 5 et les API d 'accès 4 des sources de RC 3. Dans le cas où le programme 2 s'exécute au sein d'un navigateur, l'API de mutualisation 5 doit respecter le format d'interface avec ce navigateur (JNI, JRI ou RNI dans le cas où le LCM est Java).

A la mise en marche de la plate-forme 1, ou la première fois qu'il est invoqué par un programme 2, le pont 6 établit des sessions de communication avec chacune des sources de RC 3 à travers leurs interfaces d'accès respectives 4. Il maintient ensuite ces sessions actives. Il relaie vers les sources de RC les ordres provenant de l'API de mutualisation 5. Ces ordres ne s'adressent pas à une source de RC en particulier, mais à l'ensemble de ces sources, dont le pont 6 fournit une vision générale et abstraite. Le pont récupère une à une les réponses des sources de RC et, selon le contexte, les relaie en retour à l'application 2 par l'intermédiaire de l'API de mutualisation 5.

En général, une application 2 qui a besoin de ressources cryptographiques commence par transmettre sur l'API 5 une commande de recherche de données d'identification cryptographique, ces données prenant typiquement la forme d'un certificat X.509 (voir RFC 2459 publiée par l'IETF). En réponse à cette commande reçue sur l'API 5, le pont 6 interroge chaque source de RC 3. Les certificats retournés par les sources 3 sur leurs API d'accès 4 sont analysés par le pont 6 qui les filtre pour construire la réponse retournée à l'application par l'intermédiaire de l'API de mutualisation 5. Ensuite, l'application 2 adresse une commande d'opération cryptographique au pont 6 par l'intermédiaire de l'interface de mutualisation 5, en spécifiant le certificat correspondant aux RC auxquelles il y a lieu de faire appel, obtenu dans la réponse à la commande de recherche précédente. Le pont 6 dirige alors cette commande d'opération cryptographique vers la source de RC qui a fourni ce certificat, en opérant les traductions nécessaires pour passer de l'API de mutualisation 5 à l'API d'accès correspondante 4. Le résultat de l'opération cryptographique retourné par la source de RC 3 sera ensuite relayée par le pont 6 vers l'application 2 par l'intermédiaire de l'API de mutualisation 5.

Par exemple, si le programme 2 doit effectuer une opération de chiffrement de type PKCS#1, il commence par questionner le pont 6 pour qu'il lui fournisse les certificats correspondants qui sont à sa disposition. Le pont 6 obtient une liste de certificats des sources 3, et détermine ceux qui sont en adéquation avec la requête de l'application et qui seuls seront fournis à l'application. Celle-ci sélectionne un certificat (s'il y en a plusieurs) puis demande l'exécution de l'opération de chiffrement par l'intermédiaire de l'API 5 en fournissant le message à chiffrer et le nombre aléatoire à employer. Le pont 6 relaie cette commande à la source appropriée 3 puis renvoie sur l'API 5 la réponse reçue sur l'API 4.

Tout ceci est réalisé sans que l'application 2 ait connaissance de la source 3 qui sera opérante ni même de la nature de son interface d'accès 4. Il n'est donc pas nécessaire pour le développeur des applications en LCM 2 de prendre en compte les spécificités des différents types de sources de RC.

La figure 2 montre une architecture préférée des services de sécurité dans une application 2 écrite en LCM. De façon connue, ces services sont par exemple la signature électronique, la vérification de signature électronique, le chiffrement, le déchiffrement, l'horodatage, la vérification d'horodatage, les instances de protocoles sécurisés, l'authentification, ...

Ces services sont fournis au sein de l'application en LCM 2 au moyen d'une boîte à outils cryptographiques 10 dont l'architecture logicielle est modulaire. On notera que les modules 11-15 ne sont pas nécessairement cloisonnés, pour des raisons de volume de l'implémentation.

La boîte à outils cryptographiques 10 comprend:
- un module fonctionnel 11;
- un module 12 d'accès aux ressources cryptographiques;
- un module de primitives 13; et
- un module de manipulation de formats de données 14.

Sur la figure 2 (comme sur la figure 1), l'orientation des flèches indique le sens dans lequel les modules 11-14 sont appelés.

Un module d'utilitaires 15 complète de préférence ces quatre modules 11-14. Ce module d'utilitaires 15 peut être appelé par l'un quelconque des autres modules 11-14 de la boîte à outils 10. Le module d'utilitaires 15 a en charge les fonctionnalités suivantes:
- gérer les écarts des plates-formes 1 aux spécifications du LCM ainsi que les spécificités du système d'exploitation utilisés dans ces plates-formes;
- manipuler les différentes formes d'encodage possibles (par exemple conversions entre binaire, Base64, PEM, etc.);
- le cas échéant, gérer la journalisation, l'auto-installation de la boîte à outils 10, sa mise à jour, etc.

Le module de manipulation de formats de données 14 permet la manipulation de données et messages cryptographiques dans des formats standard tels que par exemple PKCS#7/CMS, PGP, XML-DSig, certificats X.509, listes de révocation X.509 (CRL, "Certificate Revocation List"), OCSP, etc., en permettant notamment leur codage et leur décodage. Ce module 14 est de préférence autonome, c'est-à-dire qu'il n'a pas besoin de faire appel aux autres modules 11-13.

Par exemple, pour les standards issus du groupe de travail sur les infrastructures à clé publique de l'IETF (PKIX) dont les formats de données sont décrits en ASN.1 ("Abstract Syntax Notation N° 1"), le module de manipulation de formats de données comprendra un ou des encodeurs/décodeurs ASN.1 ainsi que les types décrits dans PKIX.

Le module de primitives 13 rassemble:
- des algorithmes cryptographiques, notamment les algorithmes de hachage, de génération de nombres aléatoires, tous les algorithmes utilisant des clés publiques, etc.;
- des algorithmes de gestion des certificats et de la révocation;
- des types de données permettant la manipulation des clés et certificats (en contenant ces clés et certificats, ou en contenant une référence à ces clés et certificats). Par exemple, dans le cas où une clé privée est contenue dans une carte à puce d'où elle ne peut sortir, le type "clé" permet de faire effectuer les opérations nécessitant l'utilisation de cette clé par la carte à puce, et de récupérer le résultat de ces opérations.

Il est souhaitable que l'écriture du code de ce module de primitives 13 ne dépende que du module de manipulation de formats de données 14 qu'il peut invoquer.

Le module 12 permet d'accéder à des RC (par exemple des clés ou certificats) qui peuvent être deux types:
- RC internes, c'est-à-dire accessibles directement dans le LCM (par exemple: clés et certificats gérés directement par le programme 2). Ces ressources sont par exemple lisibles par le programme sur une unité de stockage à disques locale 20;
- RC externes, c'est-à-dire accessibles à travers l'API de mutualisation 5 (par exemple: clés et certificats sur une carte à puce, ou gérés par un navigateur).

Du point de vue du module fonctionnel 11 qui l'appelle, le module d'accès aux RC 12 permet de faire abstraction du type de RC, ainsi que de l'interface d'accès à ces RC. Grâce à cela, le programme peut manipuler les RC sans nécessairement connaître leur support.

Dans la réalisation illustrée par la figure 2, les RC sont accessibles soit par l'intermédiaire de l'API de mutualisation 5 décrite en référence à la figure 1, qui est implémentée par un sous-module 12a du module 12 (RC externes), soit directement dans le LCM au moyen d'un sous-module 12b du module 12 (RC internes). Il est à noter que le sous-module 12b d'accès aux ressources internes est optionnel.

En dehors de la boîte à outils cryptographiques 10, le reste du programme (applet 16 dans l'exemple illustré par la figure 2) est écrit par un développeur en LCM qui est d'un métier autre que la cryptographie. Le module fonctionnel 11 présente à cette applet 16 une interface 17 appelée «API fonctionnelle» qui réalise l'algorithmique générale des fonctions de sécurité en reposant sur les modules 12-14. Les fonctions de sécurité ainsi offertes par l'API fonctionnelle sont par exemple signature électronique, vérification de signature électronique, chiffrement, déchiffrement, horodatage, vérification d'horodatage, protocoles sécurisés, authentification, etc.

Selon les cas, ces fonctions pourront avoir des paramètres permettant de modifier un comportement standard. Par exemple, la fonction de signature électronique laisse la possibilité de renvoyer des données signées aux formats PKCS#7 ou XML-DSig. Autre exemple: la fonction de vérification de signature donne la possibilité de vérifier ou non la chaîne de confiance de certification, avec contrôle de révocation ou non.

On considère ci-dessous, à titre d'illustration, le cas d'une applet Java exécutée dans un navigateur "Netscape 4" dans l'environnement "Windows" pour effectuer une ou plusieurs signatures électroniques au format PKCS#7. Ce mode de réalisation correspond au besoin d'utilisation de fonctions de sécurité à partir d'une applet Java s'exécutant dans la machine virtuelle Java de "Netscape 4". Ces navigateurs supportent une version limitée de la version 1.1 des spécifications de la plate-forme Java. Notamment, ils ne supportent pas les fonctions de sécurité standard de Java.

Le procédé de mutualisation des accès aux RC depuis Java est alors réalisé par un pont 6 qui respecte l'interface JRI avec le navigateur. Le pont fédère une ou plusieurs sources 3 respectant l'interface d'accès de type PKCS#11, dont il fournit une vision générale et abstraite. Pour accéder aux clés et certificats logiciels gérés en interne par "Netscape Navigator" et disponibles sous forme de fichiers (nommés cert7.db et key3.db dans les systèmes d'exploitation "Windows"), la source de RC 3 correspondant à ces fichiers présente une interface d'accès 4 de type PKCS#11 dédiée à l'accès à ces ressources. Le pont 6 gère une session PKCS#11 avec chaque source de RC 3 de manière transparente pour le programme 2.

Dans cet exemple, les fonctions de sécurité applicative sont construites selon l'architecture de la figure 2. Le module de manipulation de formats de données 14 implémente les standards X.509 (certificats et CRL) et PKCS#7 (format des messages signés et/ou chiffrés). Le module de primitives 13 implémente les algorithmes de hachage MD5 et SHA-1. Le module 12 d'accès aux RC réalise l'accès à travers l'API de mutualisation 5 en coopérant avec le pont 6. Enfin, le module fonctionnel fournit dans son API fonctionnelle 17 la fonction de signature, dont voici un exemple d'interface en langage Java:

```
 public class SignatureFunction
 // Initialisation de la signature
 public SignatureFunction (byte[] dataToSign) {..}
 public SignatureFunction (byte[] dataToSign, boolean detached) {..}
 public void setDetachedSignature (boolean detached) {..}
 public void setSameCertificateAcceptance (boolean accept) {..}
 // Itération de signature, afin de rajouter une signature
 // (permet la co-signature)
 public void setHashAlgorithm (String hashAlgorithm) {..}
 public void setWithCertificateChain (boolean include) {..}
 public void setWithAuthenticatedAttribute (boolean include) {..}
 public void addAuthenticatedAttribute (..) {..}
 public void setWithunauthenticatedAttribute (boolean include) {..}
 public void addunauthenticatedAttribute (..) {..}
 public void setHashAlgorithm (String hashAlgorithm) {..}
 public void sign () {..}
    // Sélection du certificat
    public CertificateListFunction getCertificateLister () {..}
    public void setcertificateListFunction
                       (UserCertificateListerFunction certLister) {..}
                       public CertificateSelector getCertificateSelector () {..}
                       public setcertificateSelector (Certificateselector selector) {..}
                       // Paramètre de l'ergonomie de signature
                       public setSignConfirmer (CertificateConfirmer confirmer) {..}
    // effectif seulement pour PKCS#11:
    public setReenterPINCode (boolean reenter) {..}
    // Finalisation
    public ASN1Object getASNlSignature {..}
    public byte[] getBinarySignature {..}
    public String getBase64Signature {..}
    public String getPEMSignature {..}
```

L'applet 16 fait appel à ces fonctions de sécurité définies par l'API fonctionnelle 17. Dans la plupart des cas, les fonctions SignatureFunction, Sign et getPEMSignature pourront suffire pour successivement initialiser exécuter et récupérer la signature numérique. Les autres fonctions permettent d'enrichir l'API fonctionnelle 15 pour les applets qui en ont besoin.

On notera que de nombreuses variantes peuvent être apportées aux exemples de réalisation précédemment décrits.

Par exemple, le pont 6 peut ne coopérer qu'avec une seule interface d'accès 4, voire à une seule source de RC 3, par exemple, à un seul type de carte à puce.

L'invention n'est pas dépendante du système d'exploitation ou du navigateur web employé. Elle ne dépend pas non plus du type d'interface entre Java et le navigateur ni des interfaces d'accès aux RC. Il peut notamment s'appuyer sur RNI et CAPI dans le cas d'un navigateur "Internet Explorer" à partir de la version 4.

Pour les navigateurs "Netscape 6", qui supportent au moins la version 1.3 des spécifications de la plate-forme Java, le procédé de mutualisation des accès aux RC depuis Java est réalisé par un pont 6 qui respecte l'interface JNI avec le navigateur. Le pont fédère un ou plusieurs modules respectant l'interface d'accès de type PKCS#11 de la même façon que pour les navigateurs Netscape 4. Cependant, les fichiers contenant les certificats et clés gérés par Netscape 6 se situent à un autre emplacement du disque dur.

L'invention est également applicable à des programmes Java autonomes, c'est-à-dire indépendants de tout navigateur. L'invention est alors mise en oeuvre essentiellement de la même manière que dans le cas du navigateur "Netscape 6". Les applications autonomes, exécutées dans une machine virtuelle Java, font appel à l'API fonctionnelle 17.

Pour les applications sur serveur, le pont 6 et la boîte à outils 10 sont similaires à ceux utilisables avec les navigateurs "Netscape 6". Cependant, l'environnement n'est pas celui d'un navigateur, mais d'un moteur de "servlet" tel que par exemple "Tomcat" de la fondation Apache Software, ou "WebSphere". Les programmes Java qui font appel à l'API fonctionnelle 17 sont des servlets exécutées dans la machine virtuelle Java du moteur, et non des applets.

Les exemples précédemment décrits dans le cas de Java sont transposables à tout LCM supporté selon les cas dans les navigateurs, dans les moteurs de servlets, ou en applications autonomes. Pour bénéficier de la mutualisation des RC, le LCM doit être capable d'accéder à des modules logiciels externes. Cela est notamment valable pour des variantes de CaML et pour C#.

## Revendications

1. Procédé pour permettre l'accès à des ressources cryptographiques depuis au moins une application informatique (2) écrite dans un langage de programmation dont un code résultant est indépendant d'un microprocesseur ou d'un système d'exploitation, les ressources cryptographiques étant fournies par au moins une source cryptographique (3) ayant une interface d'accès propre (4), comprenant :
implémenter, par un module de traduction (6), une interface mutualisée (5) indépendante des sources cryptographiques et de leurs interfaces d'accès respectives pour communiquer avec l'application, le module de traduction (6) étant placé entre l'application et chaque interface d'accès à une source cryptographique pour assurer l'accès aux ressources cryptographiques depuis l'application à travers l'interface mutualisée ;
activer et maintenir, par le module de traduction, une session de communication entre le module de traduction (6) et chaque source cryptographique (3) à travers son interface d'accès respective (4) ;
en réponse à une commande de recherche reçue sur l'interface mutualisée (5), interroger, par le module de traduction (6), chaque source cryptographique (3) pour obtenir des données d'identification cryptographique,
filtrer, par le module de traduction (6) ces données d'identification pour construire une réponse retournée à l'application (2) par l'intermédiaire de l'interface mutualisée ;
recevoir une commande d'opération cryptographique adressée depuis l'application (2), par le module de traduction (6), par l'intermédiaire de l'interface mutualisée (5), la commande d'opération cryptographique incluant des données d'identification obtenues dans la réponse faite à ladite commande de recherche,
diriger, par le module de traduction(6) ladite commande d'opération cryptographique vers la source cryptographique (3) ayant fourni lesdites données d'identification.

2. Procédé selon la revendication 1, dans lequel la réponse retournée par le module de traduction (6) par l'intermédiaire de l'interface mutualisée (5) comporte au moins un certificat cryptographique correspondant à la commande de recherche.

3. Procédé selon l'une quelconque des revendications précédentes, dans lequel le module de traduction (6) est un programme résidant d'une plate-forme d'exécution (1) de l'application en langage de programmation dont un code résultant est indépendant d'un microprocesseur ou d'un système d'exploitation (2).

4. Procédé selon l'une quelconque des revendications précédentes, dans lequel l'application (2) est munie d'une boîte à outils cryptographiques à architecture modulaire (10) comportant:
un module (14) de manipulation de formats de données utilisés dans l'accomplissement de fonctions cryptographiques;
un module (13) d'exécution d'algorithmes intervenant dans des opérations cryptographiques;
un module (12) d'accès aux ressources cryptographiques, coopérant avec le module de traduction par l'intermédiaire de l'interface mutualisée (5); et
un module fonctionnel (11) supervisant les modules de manipulation des formats de données, d'exécution d'algorithmes et d'accès aux ressources cryptographiques, et présentant une interface fonctionnelle (17) avec le reste de l'application (16) .

5. Procédé selon la revendication 4, dans lequel le module (12) d'accès aux ressources cryptographiques comporte un sous-module (12b) d'accès à des ressources directement accessibles par le langage de programmation dont un code résultant est indépendant d'un microprocesseur ou d'un système d'exploitation de l'application (2).

6. Procédé selon la revendication 4 ou 5, dans lequel la boîte à outils cryptographiques (10) comporte en outre un module d'utilitaires (15) invocable par chacun des autres modules (11-14) de ladite boîte à outils cryptographiques.

7. Plate-forme informatique (1) apte à l'exécution d'applications (2) écrites dans un langage de programmation dont un code résultant est indépendant d'un microprocesseur ou d'un système d'exploitation, comprenant au moins une source cryptographique (3) ayant une interface d'accès propre (4), comprenant en outre un module de traduction (6) pour implémenter une interface mutualisée (5) indépendante des sources cryptographiques et de leurs interfaces d'accès respectives pour communiquer avec les applications, le module de traduction étant placé entre les applications et chaque interface d'accès à une source cryptographique pour assurer l'accès aux ressources cryptographiques depuis les applications à travers l'interface mutualisée ;
le module de traduction comprenant en outre :
des moyens pour activer et maintenir une session de communication avec chaque source cryptographique (3) à travers son interface d'accès respective (4) ;
des moyens pour interroger chaque source cryptographique (3) en réponse à une commande de recherche reçue d'une application (2) sur l'interface mutualisée (5), pour obtenir des données d'identification cryptographique,
des moyens de filtrage desdites données d'identification pour construire une réponse retournée à l'application par l'intermédiaire de l'interface mutualisée ; et
des moyens pour recevoir une commande d'opération cryptographique adressée par l'application (2) par l'intermédiaire de l'interface mutualisée (5) et incluant des données d'identification obtenues dans la réponse faite à ladite commande de recherche, et pour diriger ladite commande d'opération cryptographique vers la source cryptographique (3) ayant fourni lesdites données d'identification.

8. Plate-forme informatique selon la revendication 7, dans laquelle la réponse retournée par le module de traduction (6) par l'intermédiaire de l'interface mutualisée (5) comporte au moins un certificat cryptographique correspondant à la commande de recherche.

9. Module logiciel de traduction (6), à exécuter dans une plate-forme informatique (1) apte à l'exécution d'applications (2) écrites dans un langage de programmation dont un code résultant est indépendant d'un microprocesseur ou d'un système d'exploitation et comprenant au moins une source cryptographique (3) ayant une interface d'accès propre (4), le module logiciel de traduction (6) implémentant une interface mutualisée (5) indépendante des sources cryptographiques et de leurs interfaces d'accès respectives pour communiquer avec les applications, et étant placé entre les applications et chaque interface d'accès à une source cryptographique pour assurer l'accès aux ressources cryptographiques depuis les applications à travers l'interface mutualisée ;
comportant en outre :
des instructions pour activer et maintenir une session de communication avec chaque source cryptographique (3) à travers son interface d'accès respective (4) ;
des instructions pour interroger chaque source cryptographique (3) en réponse à une commande de recherche reçue d'une application (2) sur l'interface mutualisée (5), pour obtenir des données d'identification cryptographique,
des instructions pour construire une réponse retournée à l'application par l'intermédiaire de l'interface mutualisée, par filtrage desdites données d'identification ; et
des instructions pour recevoir une commande d'opération cryptographique adressée par l'application (2) par l'intermédiaire de l'interface mutualisée (5) et incluant des données d'identification obtenues dans la réponse faite à ladite commande de recherche, et pour diriger ladite commande d'opération cryptographique vers la source cryptographique (3) ayant fourni lesdites données d'identification.

10. Module logiciel selon la revendication 9, dans lequel la réponse retournée par l'intermédiaire de l'interface mutualisée (5) comporte au moins un certificat cryptographique correspondant à la commande de recherche.

## Patentansprüche

1. Verfahren zum Ermöglichen des Zugriffs auf kryptographische Ressourcen von mindestens einer Computerapplikation (2) aus, die in einer Programmiersprache geschrieben ist, bei der ein resultierender Code unabhängig von einem Mikroprozessor oder einem Betriebssystem ist, wobei die kryptographischen Ressourcen von mindestens einer kryptographischen Quelle (3) geliefert werden, die eine eigene Zugriffsschnittstelle (4) hat, umfassend:
Implementieren, durch ein Übersetzungsmodul (6), einer gemeinsam genutzten Schnittstelle (5), die von den kryptographischen Ressourcen und ihren jeweiligen Zugriffsschnittstellen unabhängig ist, zum Kommunizieren mit der Applikation, wobei das Übersetzungsmodul (6) zwischen der Applikation und jeder Zugriffsschnittstelle auf eine kryptographische Ressource angeordnet ist, um den Zugriff auf die kryptographischen Ressourcen von der Applikation aus über die gemeinsam genutzte Schnittstelle sicherzustellen;
Aktivieren und Aufrechterhalten, durch das Übersetzungsmodul, einer Kommunikationssitzung zwischen dem Übersetzungsmodul (6) und jeder kryptographischen Quelle (3) über ihre jeweilige Zugriffsschnittstelle (4) ;
Abfragen jeder kryptographischen Quelle (3) durch das Übersetzungsmodul (6), um Daten zur kryptographischen Identifizierung zu erhalten, als Antwort auf einen an der gemeinsam genutzten Schnittstelle (5) empfangenen Suchbefehl,
Filtern dieser Identifizierungsdaten durch das Übersetzungsmodul (6), um eine Antwort aufzubauen, die über die gemeinsam genutzte Schnittstelle an die Applikation (2) zurückgesandt wird;
Empfangen eines von der Applikation (2) aus adressierten Kryptographievorgangsbefehls durch das Übersetzungsmodul (6) über die gemeinsam genutzte Schnittstelle (5), wobei der Kryptographievorgangsbefehl Identifizierungsdaten beinhaltet, die in der Antwort auf den Suchbefehl erhalten wurden,
Lenken des Kryptographievorgangsbefehls durch das Übersetzungsmodul(6) zu der kryptographischen Quelle (3), die die Identifizierungsdaten geliefert hat.

2. Verfahren nach Anspruch 1, wobei die vom Übersetzungsmodul (6) über die gemeinsam genutzte Schnittstelle (5) zurückgesandte Antwort mindestens ein kryptographisches Zertifikat umfasst, das dem Suchbefehl entspricht.

3. Verfahren nach einem der vorhergehenden Ansprüche, wobei das Übersetzungsmodul (6) ein residentes Programm einer Ausführungsplattform (1) der Applikation in Programmiersprache ist, bei der ein resultierender Code von einem Mikroprozessor oder einem Betriebssystem (2) unabhängig ist.

4. Verfahren nach einem der vorhergehenden Ansprüche, wobei die Applikation (2) mit einem Kryptographiewerkzeugkasten mit modularer Architektur (10) versehen ist, umfassend:
ein Modul (14) zur Manipulation von Datenformaten, die bei der Erledigung von kryptographischen Funktionen verwendet werden;
ein Modul (13) zur Ausführung von Algorithmen, die an kryptographischen Vorgängen beteiligt sind;
ein Modul (12) zum Zugreifen auf die kryptographischen Ressourcen, das mit dem Übersetzungsmodul über die gemeinsam genutzte Schnittstelle (5) zusammenwirkt, und ein funktionales Modul (11), das die Module zur Manipulation der Datenformate, zur Ausführung von Algorithmen und zum Zugreifen auf die kryptographischen Ressourcen überwacht und eine funktionale Schnittstelle (17) zum Rest der Applikation (16) aufweist.

5. Verfahren nach Anspruch 4, wobei das Modul (12) zum Zugreifen auf die kryptographischen Ressourcen ein Teilmodul (12b) zum Zugreifen auf Ressourcen umfasst, auf die von der Programmiersprache, bei der ein resultierender Code von einem Mikroprozessor oder einem Betriebssystem der Applikation (2) unabhängig ist, direkt zugegriffen werden kann.

6. Verfahren nach Anspruch 4 oder 5, wobei der Kryptographiewerkzeugkasten (10) ferner ein Hilfsprogrammemodul (15) umfasst, das von jedem der anderen Module (11-14) des Kryptographiewerkzeugkastens aufgerufen werden kann.

7. Computerplattform (1), die zur Ausführung von Applikationen (2) geeignet ist, die in einer Programmiersprache geschrieben sind, bei der ein resultierender Code von einem Mikroprozessor oder einem Betriebssystem unabhängig ist, umfassend mindestens eine kryptographische Quelle (3) mit einer eigenen Zugriffsschnittstelle (4), umfassend ferner ein Übersetzungsmodul (6) zum Implementieren einer gemeinsam genutzten Schnittstelle (5), die unabhängig von den kryptographischen Quellen und ihren jeweiligen Zugriffsschnittstellen ist, um mit den Applikationen zu kommunizieren, wobei das Übersetzungsmodul zwischen den Applikationen und jeder Zugriffsschnittstelle auf eine kryptographische Ressource angeordnet ist, um den Zugriff auf die kryptographischen Ressourcen von den Applikationen aus über die gemeinsam genutzte Schnittstelle sicherzustellen;
wobei das Übersetzungsmodul ferner umfasst:
Mittel zum Aktivieren und Aufrechterhalten einer Kommunikationssitzung mit jeder kryptographischen Quelle (3) über ihre jeweilige Zugriffsschnittstelle (4) ;
Mittel zum Abfragen jeder kryptographischen Quelle (3) als Antwort auf einen Suchbefehl, der von einer Applikation (2) über die gemeinsam genutzte Schnittstelle (5) erhalten wird, um Daten zur kryptographischen Identifizierung zu erhalten,
Mittel zum Filtern der Identifizierungsdaten, um eine Antwort aufzubauen, die über die gemeinsam genutzte Schnittstelle an die Applikation zurückgesandt wird, und
Mittel zum Empfangen eines Kryptographievorgangsbefehls, der von der Applikation (2) über die gemeinsam genutzte Schnittstelle (5) adressiert wird und Identifizierungsdaten beinhaltet, die in der Antwort auf den Suchbefehl erhalten wurden, und zum Lenken des Kryptographievorgangsbefehls zu der kryptographischen Quelle (3), die die Identifizierungsdaten geliefert hat.

8. Computerplattform nach Anspruch 7, wobei die vom Übersetzungsmodul (6) über die gemeinsam genutzte Schnittstelle (5) zurückgesandte Antwort mindestens ein kryptographisches Zertifikat umfasst, das dem Suchbefehl entspricht.

9. Übersetzungssoftwaremodul (6), das in einer Computerplattform (1) auszuführen ist, die zur Ausführung von Applikationen (2) geeignet ist, die in einer Programmiersprache geschrieben sind, bei der ein resultierender Code von einem Mikroprozessor oder einem Betriebssystem unabhängig ist, und mindestens eine kryptographische Quelle (3) mit einer eigenen Zugriffsschnittstelle (4) umfasst, wobei das Übersetzungssoftwaremodul (6) ferner eine gemeinsam genutzte Schnittstelle (5) implementiert, die unabhängig von den kryptographischen Quellen und ihren jeweiligen Zugriffsschnittstellen ist, um mit den Applikationen zu kommunizieren, und zwischen den Applikationen und jeder Zugriffsschnittstelle auf eine kryptographische Ressource angeordnet ist, um den Zugriff auf die kryptographischen Ressourcen von den Applikationen aus über die gemeinsam genutzte Schnittstelle sicherzustellen;
umfassend ferner:
Anweisungen zum Aktivieren und Aufrechterhalten einer Kommunikationssitzung mit jeder kryptographischen Quelle (3) über ihre jeweilige Zugriffsschnittstelle (4) ;
Anweisungen zum Abfragen jeder kryptographischen Quelle (3) als Antwort auf einen Suchbefehl, der von einer Applikation (2) über die gemeinsam genutzte Schnittstelle (5) empfangen wird, um Daten zur kryptographischen Identifizierung zu erhalten,
Anweisungen zum Aufbauen einer Antwort, die an die Applikation über die gemeinsam genutzte Schnittstelle zurückgesandt wird, durch Filtern der Identifizierungsdaten, und
Anweisungen zum Empfangen eines Kryptographievorgangsbefehls, der von der Applikation (2) über die gemeinsam genutzte Schnittstelle (5) adressiert wird und Identifizierungsdaten beinhaltet, die in der Antwort auf den Suchbefehl erhalten wurden, und zum Lenken des Kryptographievorgangsbefehls zu der kryptographischen Quelle (3), die die Identifizierungsdaten geliefert hat.

10. Softwaremodul nach Anspruch 9, wobei die über die gemeinsam genutzte Schnittstelle (5) zurückgesandte Antwort mindestens ein kryptographisches Zertifikat umfasst, das dem Suchbefehl entspricht.

## Claims

1. Method for allowing access to cryptographic resources from at least one computing application (2) written in a programming language of which a resulting code is independent of a microprocessor or of an operating system, the cryptographic resources being provided by at least one cryptographic source (3) having its own access interface (4), comprising:
implementing, by a translation module (6), a pooled interface (5) which is independent of the cryptographic sources and of their respective access interfaces so as to communicate with the application, the translation module (6) being placed between the application and each interface for accessing a cryptographic source so as to ensure access to the cryptographic resources from the application through the pooled interface;
activating and maintaining, by the translation module, a communication session between the translation module (6) and each cryptographic source (3) through its respective access interface (4);
in response to a search command received on the pooled interface (5), interrogating, by the translation module (6), each cryptographic source (3) so as to obtain cryptographic identification data,
filtering, by the translation module (6), these identification data so as to construct a response returned to the application (2) by way of the pooled interface;
receiving a cryptographic operation command addressed from the application (2), by the translation module (6), by way of the pooled interface (5), the cryptographic operation command including identification data obtained in the response made to said search command,
directing, by the translation module (6), said cryptographic operation command towards the cryptographic source (3) that provided said identification data.

2. Method according to Claim 1, in which the response returned by the translation module (6) by way of the pooled interface (5) comprises at least one cryptographic certificate corresponding to the search command.

3. Method according to any one of the preceding claims, in which the translation module (6) is a resident program of an execution platform (1) of the application in a programming language of which a resulting code is independent of a microprocessor or of an operating system (2).

4. Method according to any one of the preceding claims, in which the application (2) is furnished with a box of cryptographic tools with modular architecture (10) comprising:
a module (14) for manipulating data formats used in the accomplishment of cryptographic functions;
a module (13) for executing algorithms involved in cryptographic operations;
a module (12) for accessing the cryptographic resources, cooperating with the translation module by way of the pooled interface (5); and
a functional module (11) supervising the modules for manipulating the data formats, for executing algorithms and for accessing the cryptographic resources, and exhibiting a functional interface (17) with the remainder of application (16).

5. Method according to Claim 4, in which the module (12) for accessing the cryptographic resources comprises a sub-module (12b) for accessing resources that are directly accessible by the programming language of which a resulting code is independent of a microprocessor or of an operating system of the application (2).

6. Method according to Claim 4 or 5, in which the box of cryptographic tools (10) furthermore comprises a utilities module (15) invocable by each of the other modules (11-14) of said box of cryptographic tools.

7. Computing platform (1) suitable for the execution of applications (2) written in a programming language of which a resulting code is independent of a microprocessor or of an operating system, comprising at least one cryptographic source (3) having its own access interface (4), furthermore comprising a translation module (6) so as to implement a pooled interface (5) which is independent of the cryptographic sources and of their respective access interfaces so as to communicate with the applications, the translation module being placed between the applications and each interface for accessing a cryptographic source so as to ensure access to the cryptographic resources from the applications through the pooled interface;
the translation module furthermore comprising:
means for activating and maintaining a communication session with each cryptographic source (3) through its respective access interface (4);
means for interrogating each cryptographic source (3) in response to a search command received from an application (2) on the pooled interface (5), so as to obtain cryptographic identification data,
means for filtering said identification data so as to construct a response returned to the application by way of the pooled interface; and
means for receiving a cryptographic operation command addressed by the application (2) by way of the pooled interface (5) and including identification data obtained in the response made to said search command, and for directing said cryptographic operation command towards the cryptographic source (3) that provided said identification data.

8. Computing platform according to Claim 7, in which the response returned by the translation module (6) by way of the pooled interface (5) comprises at least one cryptographic certificate corresponding to the search command.

9. Translation software module (6), to be executed in a computing platform (1) suitable for the execution of applications (2) written in a programming language of which a resulting code is independent of a microprocessor or of an operating system and comprising at least one cryptographic source (3) having its own access interface (4), the translation software module (6) implementing a pooled interface (5) which is independent of the cryptographic sources and of their respective access interfaces so as to communicate with the applications, and being placed between the applications and each interface for accessing a cryptographic source so as to ensure access to the cryptographic resources from the applications through the pooled interface;
furthermore comprising:
instructions for activating and maintaining a communication session with each cryptographic source (3) through its respective access interface (4);
instructions for interrogating each cryptographic source (3) in response to a search command received from an application (2) on the pooled interface (5), so as to obtain cryptographic identification data,
instructions for constructing a response returned to the application by way of the pooled interface, by filtering said identification data; and
instructions for receiving a cryptographic operation command addressed by the application (2) by way of the pooled interface (5) and including identification data obtained in the response made to said search command, and for directing said cryptographic operation command towards the cryptographic source (3) that provided said identification data.

10. Software module according to Claim 9, in which the response returned by way of the pooled interface (5) comprises at least one cryptographic certificate corresponding to the search command.
